(19)

Europäisches
Patentamt

European
Patent Office

Office européen
des brevets

(11) **EP 4 642 079 A1**

(12) **EUROPEAN PATENT APPLICATION**
published in accordance with Art. 153(4) EPC

(43) Date of publication:
**29.10.2025 Bulletin 2025/44**

(21) Application number: **23919547.2**

(22) Date of filing: **26.12.2023**

(51) International Patent Classification (IPC):
*H04W 24/02* (2009.01)

(52) Cooperative Patent Classification (CPC):
**H04W 24/02; H04W 24/06; H04W 84/12**

(86) International application number:
**PCT/CN2023/142126**

(87) International publication number:
**WO 2024/159986 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.02.2023  CN 202310145986**

(71) Applicant: **ZTE CORPORATION
Shenzhen, Guangdong 518057 (CN)**

(72) Inventors:
• **HUANG, Qisheng
  Shenzhen, Guangdong 518057 (CN)**
• **ZHANG, Yaodong
  Shenzhen, Guangdong 518057 (CN)**
• **WANG, Zisheng
  Shenzhen, Guangdong 518057 (CN)**
• **LIU, Xinying
  Shenzhen, Guangdong 518057 (CN)**

(74) Representative: **Cristinelli, Luca et al
Jacobacci & Partners S.p.A.
Corso Emilia, 8
10152 Torino (IT)**

(54) **METHOD AND APPARATUS FOR GENERATING DYNAMIC THRESHOLD PARAMETER OF
WIRELESS LOCAL AREA NETWORK**

(57)   The embodiments of the present disclosure provide a method and apparatus for generating a dynamic threshold parameter of a wireless local area network. The method comprises: determining a target threshold parameter by means of a threshold evaluation model pretrained by a server; configuring the target threshold parameter to an edge computing node connected to a wireless access node; collecting from the edge computing node a target statistical parameter corresponding to the target threshold parameter, so as to obtain a target tag pair; and updating the threshold evaluation model by using the target tag pair, and determining a new target threshold parameter by means of the updated threshold evaluation model.

Fig. 2

Determining a target threshold parameter by using a threshold evaluation model pre-trained by a server — S202

Configuring the target threshold parameter to an edge computing node connected to a wireless access point, wherein the edge computing node is configured to run a preset adaptive algorithm according to the target threshold parameter — S204

Collecting a target statistical parameter corresponding to the target threshold parameter from the edge computing node, so as to obtain a target label pair — S206

Updating the threshold evaluation model by using the target label pair, and determining a new target threshold parameter through the updated threshold evaluation model — S208

## Description

### Cross-Reference to Related Application

The present disclosure is based on and claims priority to Chinese Patent Application 2023101459860 filed on February 1, 2023 and entitled "Method and Apparatus for Generating Dynamic Threshold Parameter of Wireless Local Area Network", the disclosure of which is incorporated herein by reference in its entirety.

### Technical Field

Embodiments of the present disclosure relate to the field of wireless local area networks, and in particular, to a method and apparatus for generating a dynamic threshold parameter of a Wireless Local Area Network (WLAN).

### Background

Existing Wireless Fidelity (WIFI) products typically utilize fixed threshold parameters and adaptive algorithms to implement functions such as channel selection or bandwidth expansion, such as automatic channel selection algorithms based on threshold parameters, dynamic bandwidth algorithms based on thresholds, and dynamic spatial reuse threshold algorithms, etc. However, a set of fixed threshold parameters is difficult to apply to all environments.

Therefore, there is a need to design a system that can dynamically adjust threshold parameters according to the environment to maximize the functionality of adaptive algorithms. The challenge lies in accomplishing the mapping from threshold parameters to evaluation values, as the actual environment is complex and variable, making it difficult to directly abstract a mathematical model with good generalization capabilities to complete this mapping.

In summary, a solution has not yet been proposed to address the problem in related technologies where the use of fixed threshold parameters is not suitable for all network environments.

### Summary

Embodiments of the present disclosure provide a method and apparatus for generating a dynamic threshold parameter of a wireless local area network, which may at least solve the problem in related technologies where the use of fixed threshold parameters is not suitable for all network environments.

According to an embodiment of the present disclosure, a method for generating a dynamic threshold parameter of a wireless local area network is provided. The method includes:

determining a target threshold parameter by using a threshold evaluation model pre-trained by a server;

configuring the target threshold parameter to an edge computing node connected to a wireless access point, wherein the edge computing node is configured to run a preset adaptive algorithm according to the target threshold parameter;

collecting a target statistical parameter corresponding to the target threshold parameter from the edge computing node, so as to obtain a target label pair; and

updating the threshold evaluation model by using the target label pair, and determining a new target threshold parameter through the updated threshold evaluation model.

According to another embodiment of the present disclosure, an apparatus for generating a dynamic threshold parameter of a wireless local area network is provided. The device includes:

a determination module, configured to determine a target threshold parameter by using a threshold evaluation model pre-trained by a server;

a configuration module, configured to configure the target threshold parameter to an edge computing node connected to a wireless access point, wherein the edge computing node is configured to run a preset adaptive algorithm according to the target threshold parameter;

a collection module, configured to collect a target statistical parameter corresponding to the target threshold parameter from the edge computing node, so as to obtain a target label pair; and

an updating module, configured to update the threshold evaluation model by using the target label pair, and determining a new target threshold parameter through the updated threshold evaluation model.

According to still another embodiment of the present disclosure, a computer-readable storage medium is further provided, wherein the computer-readable storage medium stores a computer program, and the computer program, when being run by a processor, causes the processor to execute the operations in any method embodiment mentioned above.

According to yet another embodiment of the present disclosure, an electronic device is further provided, including a memory and a processor, wherein the memory stores a computer program, and the processor is configured to run the computer program so as to execute the operations in any one of the method embodiments.

**Brief Description of the Drawings**

Fig. 1 is a block diagram showing the hardware structure of a mobile terminal for generating a dynamic threshold parameter of a wireless local area network according to some embodiments of the present disclosure;

Fig. 2 is a flowchart of a method for generating a dynamic threshold parameter of a wireless local area network according to some embodiments of the present disclosure;

Fig. 3 is a structure diagram of a system for generating a dynamic threshold parameter according to some embodiments of the present disclosure;

Fig. 4 is a flowchart of timing model training and threshold parameter updating according to some embodiments of the present disclosure;

Fig. 5 is a flowchart of model training and threshold updating according to some embodiments of the present disclosure; and

Fig. 6 is a block diagram of an apparatus for generating a dynamic threshold parameter of a wireless local area network according to some embodiments of the present disclosure.

**Detailed Description of the Embodiments**

The embodiments of the present disclosure will be described below in detail with reference to the accompanying drawings and in conjunction with embodiments.

It should be noted that, terms such as "first" and "second" in the description, claims, and accompanying drawings of the present disclosure are used to distinguish similar objects, but are not necessarily used to describe a specific sequence or order.

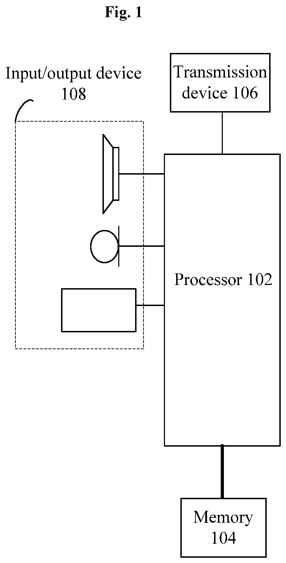

The method embodiments provided in the embodiments of the present disclosure may be executed in a mobile terminal, a computer terminal or a similar computing device. Taking the mobile terminal as an example, Fig. 1 is a block diagram showing the hardware structure of a mobile terminal for generating a dynamic threshold parameter of a wireless local area network according to some embodiments of the present disclosure. As shown in Fig. 1, the mobile terminal may include one or more processors (only one is shown in Fig. 1) 102 and a memory 104 configured to store data. Each of the one or more processors 102 may include, but is not limited to, a processing device such as a Micro Controller Unit (MCU) or a programmable logic device (e.g., Field Programmable Gate Array (FPGA)). The mobile terminal may further include a transmission device 106 configured to perform a communication function and an input/output device 108. Those having ordinary skill in the art may understand that the structure shown in Fig. 1 is merely exemplary, which does not limit the structure of the foregoing mobile terminal. For example, the mobile terminal may further include more or fewer components than shown in Fig. 1, or have a different configuration from that shown in Fig. 1.

The memory 104 may be configured to store a computer program, for example, a software program of application software and a module, such as a computer program corresponding to the method for generating the dynamic threshold parameter of the wireless local area network in the embodiments of the present disclosure. The one or more processors 102 runs the computer program stored in the memory 104, so as to execute various function applications and service chain address pool slicing processing, that is, to realize the described method. The memory 104 may include a high-speed random access memory, and may also include a non-volatile memory, such as one or more magnetic storage devices, flash memory, or other non-volatile solid-state memory. In some instances, the memory 104 may further include a memory remotely located with respect to the one or more processors 102, which may be connected to the mobile terminal over a network. Examples of such network include, but are not limited to, the Internet, intranets, local area networks, mobile communication networks, and combinations thereof.

The transmission device 106 is configured to receive or transmit data via a network. Specific examples of the described network may include a wireless network provided by a communication provider of the mobile terminal. In an example, the transmission device 106 may include a Network Interface Controller (NIC) that may be coupled to other network devices via a base station to communicate with the Internet. In an example, the transmission device 106 may be a Radio Frequency (RF) module configured to communicate with the Internet wirelessly.

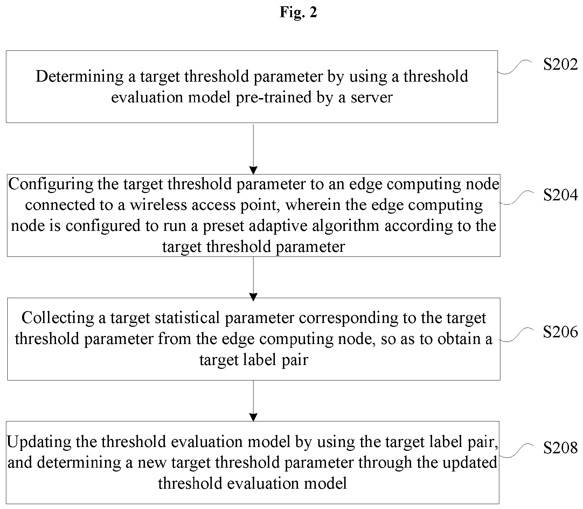

Some embodiments of the present disclosure provide a method for generating a dynamic threshold parameter of a wireless local area network operating in the above mobile terminal or network architecture. Fig. 2 is a flowchart of a method for generating a dynamic threshold parameter of a wireless local area network according to some embodiments of the present disclosure. As shown in Fig. 2, the flow includes the following operations S202 to S208.

In operation S202, a target threshold parameter is determined by using a threshold evaluation model pre-trained by a server.

In operation S204, the target threshold parameter is configured to an edge computing node connected to a wireless access point (also denoted as Access Point (AP)), wherein the edge computing node is configured to run a preset adaptive algorithm according to the target threshold parameter.

In operation S206, a target statistical parameter corresponding to the target threshold parameter is collected from the edge computing node, so as to obtain a target label pair.

In operation S208, the threshold evaluation model is updated by using the target label pair, and a new target threshold parameter is determined through the updated threshold evaluation model.

In this embodiment, before operation S202, the method further includes: acquiring, from a server, an initial training parameter of the threshold evaluation model obtained by means of pre-training; and performing initialization processing on the threshold evaluation model by using the initial training parameter, so as to obtain the pre-trained threshold evaluation model.

Specifically, the initial training parameter of the threshold evaluation model is $\theta(w, b)$, wherein w is a weight, and b is an offset;

the threshold evaluation model is $\hat{V} = f_i(f_{i-1}(f_{i-2}(... f_1(x|\theta_1)|\theta_{i-2})|\theta_{i-1})|\theta_i)$: and
the pre-trained threshold evaluation model is $f_i(x) = f_a(w_i \odot x + b_i)$, wherein $\odot$ is a network operator corresponding to a neural network, and $f_a(x)$ is an activation function.

Further, the neural network may include: a Deep Neural Network (DNN), a Convolutional Neural Network (CNN) or a Recurrent Neural Network (RNN).

The activation function may include: a Linear Rectification (ReLU) activation function, a Hyperbolic Tangent (Tanh) activation function, or a Sigmoid activation function, or the like.

In this embodiment, operation S202 may specifically include the following operations S2022 to S2026.

In operation S2022, multiple threshold parameters are selected from a threshold parameter space by using a search algorithm, wherein the threshold parameter space is composed of a plurality of preset threshold parameters.

In operation S2024, statistical parameters corresponding to the multiple threshold parameters are respectively determined according to a plurality of pre-stored label pairs or according to the threshold evaluation model.

In operation S2026, a threshold parameter with a maximum statistical parameter among the multiple threshold parameters is determined as the target threshold parameter.

In this embodiment, the search algorithm in operation S2022 may randomly select the multiple threshold parameters from the threshold parameter space, or may select the multiple threshold parameters from the threshold parameter space according to a rule of a selected search algorithm, for example, depth-first search, breadth-first search, best-first search, and the like.

In this embodiment, the search algorithm may include a reinforcement learning algorithm or a genetic algorithm.

In this embodiment, operation S2024 may specifically include: determining whether the threshold parameter exists in the plurality of label pairs; in a case where the threshold parameter exists in the plurality of label pairs, determining the statistical parameter corresponding to the threshold parameter from the label pair; and in a case where the threshold parameter does not exist in the plurality of label pairs, inputting the threshold parameter into the threshold evaluation model, and determining an output result of the threshold evaluation model as the statistical parameter corresponding to the threshold parameter.

In this embodiment, operation S204 may specifically include: sending the target threshold parameter to the edge computing node, wherein the edge computing node adjusts the preset adaptive algorithm according to the target threshold parameter; and running, through the edge computing node, the preset adaptive algorithm in a process of channel access and information transmission.

Further, the preset adaptive algorithm may specifically include one of: an automatic channel selection algorithm, a dynamic bandwidth algorithm, a dynamic spatial reuse threshold algorithm, an Enhanced Distributed Channel Access (EDCA) parameter adjustment algorithm, and so on.

In this embodiment, in a case where the preset adaptive algorithm is used for channel selection, the target threshold parameter at least includes one of the following: a noise threshold, a channel utilization threshold, a channel rating-purpose weight factor, a packet error rate threshold, or a transmit power threshold.

Further, besides the above typical threshold parameter, the target threshold parameter may also be selected according to an application scenario and a corresponding adaptive algorithm, for example, any of the following threshold parameters may also be selected during channel selection: an adjacent-frequency interference threshold, a Received Signal Strength Indicator (RSSI) threshold of a primary channel, an RSSI threshold of an extended channel, a threshold of the number of co-frequency APs, and the like.

In this embodiment, operation S206 may specifically include the following operations S2062 to S2066.

In operation S2062, the target statistical parameter generated when the edge computing node runs the preset adaptive algorithm by using the target threshold parameter is collected.

In operation S2064, the target threshold parameter is normalized through the edge computing node, so as to obtain a normalized target threshold parameter.

In operation S2066, the normalized target threshold parameter and the target statistical parameter are combined to obtain the target label pair.

In this embodiment, operation S2062 may specifically include: in a process of running the preset adaptive algorithm using the target threshold parameter, acquiring a normalized throughput and/or a packet sending success rate from the edge computing node, wherein the statistical parameter includes the normalized throughput and/or the packet sending success rate, wherein the normalized throughput is a ratio of a number of successfully sent load bits to a total number of sent load bits, and the packet sending success rate is a ratio of a number of successfully sent Media Access Control (MAC) protocol data units to a total number of sent MAC protocol data units.

In this embodiment, operation S2064 may specifically include:

performing normalization processing on the target threshold parameter by using a following formula:

$$s_{norm} = \frac{1}{\sum_i ||s_i||^2} [\sqrt{s_1}, \sqrt{s_2}, \ldots, \sqrt{s_n}];$$

wherein $s_{norm}$ is the normalized target threshold parameter, $s = [s_1, s_2, \ldots, s_n]$ is a plurality of preset threshold parameters, and $s_i$ is the target threshold parameter.

In this embodiment, operation S208 may specifically include: training, at the wireless access point, the threshold evaluation model according to a gradient descent method and the target label pair to obtain a training parameter, wherein the training parameter includes a weight and an offset; and updating the threshold evaluation model using the training parameter.

Specifically, a loss function, denoted as loss, of the threshold evaluation model is:

$$loss = \frac{1}{N} \sum_k ||\widehat{V}_k - V_k||^2, \text{ or, } loss = \frac{1}{N} \sum_k V_k \log \widehat{V}_k + (1 - V_k) \log(1 - \widehat{V}_k).$$

In this embodiment, the method may further include the following operations S210 and S212.

In operation S210, a plurality of wireless access points respectively report to the server a plurality of training parameters obtained by training the threshold evaluation model according to newly collected target label pairs.

In operation S212, an initial training parameter of the threshold evaluation model of the server is updated through the server according to a federal learning algorithm and the plurality of training parameters.

In this embodiment, operation S212 may specifically include the following operations S2122 and S2124.

In operation S2122, a total loss value, denoted as loss_total, of the threshold evaluation model of the server is updated according to loss values of the threshold evaluation models of the plurality of wireless access points:

loss_total = $\Sigma_L$ loss$_l$, wherein loss$_l$ is the loss value of the threshold evaluation model of the l-th wireless access point.

In operation S2124, a second weight and a second offset of the threshold evaluation model of the server are updated according to first weights and first offsets of the threshold evaluation models of the plurality of wireless access points, wherein the initial training parameter includes the second weight and the second offset:

$$w_i = w_i + \sum_L \Delta w_l, \quad b_i = b_i + \sum_L \Delta b_l,$$

wherein $w_i$ is the second weight, $b_i$ is the second offset, $\Delta w_l$ is the first weight of the threshold evaluation model of the l-th wireless access point, and $\Delta b_l$ is the first offset of the threshold evaluation model of the l-th wireless access point.

In the embodiments of the present disclosure, by means of the method in the described operations S202 to S208, it is possible to evaluate and assess threshold parameters by collecting specific statistical parameters. This enables dynamic adjustment of threshold parameters based on the network environment, addressing the problem in related technologies where the use of fixed threshold parameters is not suitable for all network environments. By determining the optimal threshold parameters based on changes in the network environment, the system throughput is improved, transmission latency is reduced, and the user experience is enhanced..

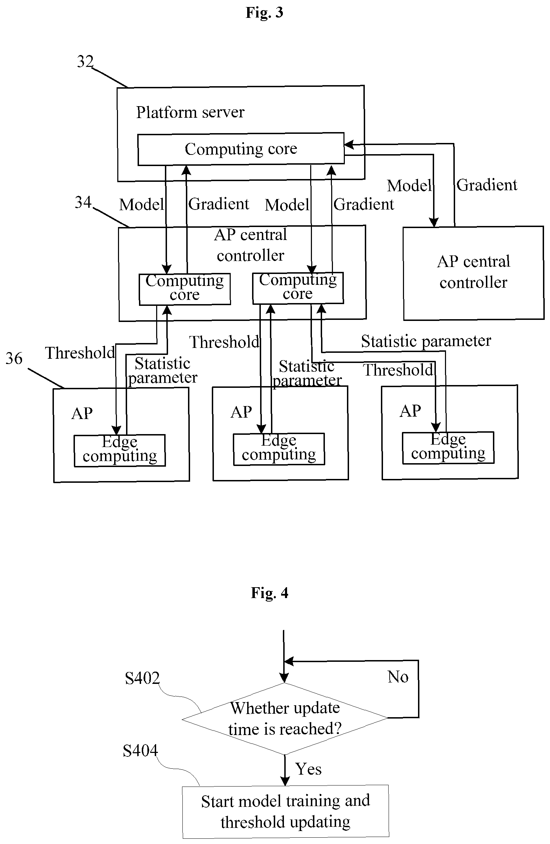

Fig. 3 is a structure diagram of a system for generating a dynamic threshold parameter according to some embodiments of the present disclosure. As shown in Fig. 3, the system includes the following structures: a platform server 32, an AP central controller 34, and an AP (wireless access point) 36.

In the embodiments of the present disclosure, the dynamic threshold parameter generation system is a networking system, and thus there is an AP central controller.

In this embodiment, each structure in the system includes a computing core with a computing capability. For the computing capability, the computing capability of the platform server 32 is higher than the computing capability of the AP central controller 34, and the computing capability of the AP central controller 34 is higher than the computing capability of the AP (wireless access point) 36. An intelligent module configured to dynamically generate a threshold is deployed on the computing core, and an input of the computing core is a label pair including a threshold parameter vector and a throughput corresponding to the threshold parameter vector.

Specifically, the computing core on the AP (wireless access point) 36 may be merely a System on Chip (SoC), and the platform server 32 with a powerful computing capability and the computing core in the AP central controller 34 may undertake main training work of the threshold evaluation model. The edge APs 36, however, only needs to handle inference work or receive model parameters and initialize thresholds for simple training and optimal threshold inference.

In this embodiment, the platform computing core of the platform server 32 trains the threshold evaluation model based on Federated Learning. The platform computing core receives reverse propagation gradients from the controller computing cores of all the AP central controllers 34, so as to obtain, via training, a parameter (i.e. an initial training parameter) that can be used for the initialization of all the platform computing cores. Briefly, the platform computing core provides a generalized template for the generation of dynamic threshold parameters.

In this embodiment, the computing core of the AP central controller 34 is configured to receive label pairs from the APs to complete the mapping from threshold parameters to scores. After the mapping of the threshold parameters to scores is completed, the computing core of the AP central controller 34 will start a search algorithm, which may be a genetic algorithm or a reinforcement learning algorithm, to produce the current optimal threshold. The functions of reasoning and searching may also be combined and uniformly accomplished by a Deep Reinforcement Learning (DQN) algorithm.

In this embodiment, the edge computing core on the AP (wireless access point) 36 mainly works as follows: setting a current threshold and acquiring a statistical parameter currently used for evaluating the quality of the current threshold, wherein the statistical parameter is usually a sending success rate or a throughput of a MAC Protocol Data Unit (MPDU) within a period of time.

In this embodiment, the model parameters refer to trainable parameters of a deep learning network, such as a weight and an offset. The network structure of the deep learning network is set in advance and does not change with time.

In this embodiment, the statistical parameters refer to relevant statistical parameters for evaluating the superiority and inferiority of the current threshold, such as a sending success rate and a throughput of an MPDU.

In another embodiment, a simplified dynamic threshold parameter generation system may have only one AP and one Station (STA) associated. In this case, both the computing core of the AP central controller 34 and the edge core of the AP (wireless access point) 36 are integrated in the AP.

In another embodiment, the simplified dynamic threshold parameter generation system may also not deploy a central controller, and the AP interacts directly with the platform server 32. The AP returns the statistics parameters to the platform server 32, and the functions of the AP central controller 34 are executed by the core computing nodes of the platform server 32.

Fig. 4 is a flowchart of timing model training and threshold parameter updating according to some embodiments of the present disclosure. As shown in Fig. 4, the flow includes the following operations S402 and S404.

In operation S402, whether an update time is reached is determined.

In operation S404, model training and threshold updating are started.

In this embodiment, the process can achieve scheduled training of the threshold evaluation model and dynamic adjustment of threshold parameters.

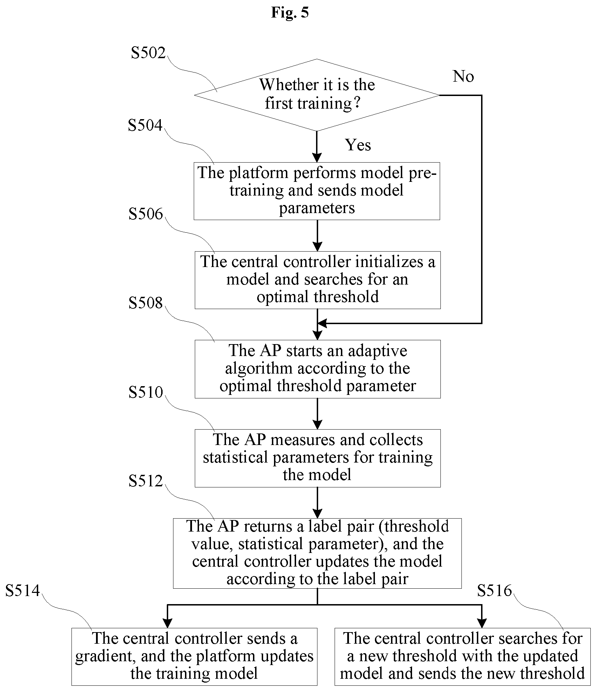

Fig. 5 is a flowchart of model training and threshold updating according to some embodiments of the present disclosure. As shown in Fig. 5, the flow includes the following operations S502 to S516.

In operation S502, whether it is a first training is determined.

In operation S504, the platform performs model pre-training and sends model parameters.

In operation S506, the central controller initializes a model and searches for an optimal threshold.

In operation S508, the AP starts an adaptive algorithm according to the optimal threshold parameter.

In operation S510, the AP measures and collects statistical parameters used for training the model.

In operation S512, the AP returns a label pair (a threshold and a statistical parameter), and the central controller updates the model according to the label pair.

In operation S514, the central controller sends a gradient, and the platform updates the training model.

In operation S516, the central controller searches for a new threshold with the updated model and sends the new threshold.

In this embodiment, operation S504 is performed when the result of the determination in operation S502 is positive, and the flow directly proceeds to operation S508 when the result of the determination in operation S502 is negative.

In this embodiment, operation S514 may be performed synchronously with operation S516.

In this embodiment, the platform will send pre-trained model inference parameters θ(w, b) to the core computing node of each central controller as the model initialization.

In this embodiment, the core computing node deploys a threshold into an AP for use by an adaptive algorithm, and the AP obtains a statistical parameter (normalized throughput, sending success rate of an MPDU) for evaluation in an operation process of the AP. The edge computing node normalizes the threshold parameter to form a label pair (threshold, statistical parameter), and feeds the label pair (threshold, statistical parameter) back to the core computing node to train an evaluation network.

Specifically, if the threshold parameter is set as $s = [s_1, s_2, \ldots, s_n]$, the normalization process is as follows:

$$s_{norm} = \frac{1}{\sum_i ||s_i||^2} [\sqrt{s_1}, \sqrt{s_2}, \ldots, \sqrt{s_n}]$$

Further, a formula for calculating the normalized throughput is as follows:

$$T_{norm} = \frac{\text{Number of successfully sent load bits}}{\text{Total number of sent load bits}}$$

The calculation formula of the sending success rate of the MPDU is as follows:

$$P_{success} = \frac{\text{the number of successfully sent MPDUs}}{\text{the total number of sent MPDUs}}$$

In this embodiment, the central controller updates the threshold evaluation model (deep learning module) by using the training label pairs (threshold parameters, statistical parameters) collected in operation S512.

In this embodiment, the key parameters of the threshold evaluation model may specifically include the following content.

Input: a training label (threshold parameter, statistical parameter) returned by an edge computing core.

Output: a prediction result of the threshold evaluation model, i.e., an evaluation parameter corresponding to the current threshold, where a higher value indicates a better effect of the current threshold.

Models and Trainable Parameters: Threshold evaluation models are typically a type of parameterized function, whose expression is as follows:

$$\widehat{V} = f_i(f_{i-1}(f_{i-2}(\ldots f_1(x|\theta_1)|\theta_{i-2})|\theta_{i-1})|\theta_i)$$

The final parameterized function is formed by cascading basic network unit functions, and its general expression is as follows:

$$f_i(x) = f_a(w_i \odot x + b_i)$$

wherein $\odot$ represents a network operator defined by the type of neural network, and commonly used networks include Dense Neural Network (DNN), Convolutional Neural Network (CNN), and Recurrent Neural Network (RNN); and $f_a(x)$ denotes an activation function, and commonly used activation functions include a ReLU activation function, a Tanh activation function, a Sigmoid activation function, etc.

Loss Function: characterizes a difference between the threshold evaluation model and reality. The loss function is defined using the mean square error as follows:

$$\text{loss} = \frac{1}{N}\sum_{k} ||\widehat{V}_k - V_k||^2$$

Alternatively, since the network uses normalized evaluation parameters, cross-entropy can also be used as a loss function:

$$\text{loss} = \frac{1}{N}\sum_{k} V_k \log\widehat{V}_k + (1 - V_k)\log(1 - \widehat{V}_k)$$

Training Method: The trainer is called at the end of each cycle, at which time the network utilizes the new label pairs collected in real-time during this cycle to train the existing network. The training targets are the trainable parameters $w_i$ and $b_i$, and the training method is gradient descent. Commonly used gradient descent methods include RMSProp, Adam algorithm, etc.

In this embodiment, the search function (i.e., the aforementioned search algorithm) randomly searches within the space constituted by a plurality of threshold parameters until it finds a set of (multiple) threshold parameters that best fit the current adaptive algorithm. The search algorithm for threshold parameters may be reinforcement learning, genetic algorithms, etc. In this process, the deep learning module is set to evaluate the currently found thresholds, completing the mapping from thresholds to evaluation values.

In this embodiment, the search algorithm may be a threshold generation algorithm based on Deep-Q-learning, where the search algorithm is a Q-learning algorithm and the Q-function is replaced by the deep learning module. The Reward function is initialized to 0, and the action is the modification of the threshold.

In this embodiment, the search algorithm may also be based on a deep learning evaluation module and a threshold generation algorithm, where the search algorithm is a genetic algorithm. The genetic algorithm is used to search for the optimal threshold, with population individuals representing a set of threshold schemes, genes representing specific threshold parameters, and the evaluation function of the genetic algorithm being the deep learning module

In this embodiment, the loss function of the platform side is the sum of the statistical parameters of all the core controllers managed by the platform:

$$\text{loss\_total} = \sum_{L} \text{loss}_l$$

Specifically, $\text{loss}_l$ represents a loss value from an l-th central control device; therefore, the gradient generated in operation 3 needs to be sent to a platform, so as to update the trainable parameter of the model stored in the platform. The update manner is as follows:

$$w_i = w_i + \sum_{L} \Delta w_l$$

$$b_i = b_i + \sum_{L} \Delta b_l$$

Further, $\Delta w_l$ and $\Delta b_l$ are gradients from the l-th core node, this approach will ensure that a very highly generalized model can be provided when the platform provides model initialization.

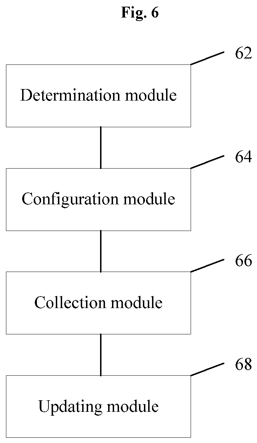

According to another aspect of the embodiments of the present disclosure, an apparatus for generating a dynamic threshold parameter of a wireless local area network is further provided. Fig. 6 is a block diagram of an apparatus for generating a dynamic threshold parameter of a wireless local area network according to some embodiments of the present disclosure. As shown in Fig. 6, the apparatus includes:

a determination module 62, configured to determine a target threshold parameter by using a threshold evaluation model pre-trained by a server;

a configuration module 64, configured to configure the target threshold parameter to an edge computing node connected to a wireless access point, wherein the edge computing node is configured to run a preset adaptive algorithm according to the target threshold parameter;

a collection module 66, configured to collect a target statistical parameter corresponding to the target threshold parameter from the edge computing node, so as to obtain a target label pair; and

an updating module 68, configured to update the threshold evaluation model by using the target label pair, and determining a new target threshold parameter through the updated threshold evaluation model.

The embodiments of the present disclosure further provide a computer-readable storage medium. The computer-readable storage medium stores a computer program, and the computer program, when being run by a processor, causes the processor to execute the operations in any method embodiment mentioned above.

In an exemplary embodiment, the computer-readable storage medium may include, but is not limited to, any medium that can store a computer program, such as a Universal Serial Bus (USB) flash drive, a Read-Only Memory (ROM), a Random Access Memory (RAM), a removable hard disk, a magnetic disk, or an optical disc.

The embodiments of the present disclosure further provide an electronic device, including a memory and a processor. The memory stores a computer program, and the processor is configured to run the computer program so as to execute the operations in any one of the method embodiments.

In an exemplary embodiment, the electronic device may further include a transmission device and an input/output device, wherein the transmission device is connected to the processor, and the input/output device is connected to the processor.

For specific examples in this embodiment, reference may be made to the examples described in the foregoing embodiments and exemplary embodiments, and details are not repeatedly described in this embodiment.

Obviously, those having ordinary skill in the art should understand that each module or each operation of the present disclosure can be implemented by a universal computing device, they may be centralized on a single computing device or distributed on a network composed of a plurality of computing devices, they can be implemented by program codes executable by a computing apparatus, and thus can be stored in a storage apparatus and executed by the computing apparatus. Furthermore, in some cases, the shown or described operations may be executed in an order different from that described here, or they are made into integrated circuit modules respectively, or a plurality of modules or operations therein are made into a single integrated circuit module for implementation. As such, the present disclosure is not limited to any particular hardware and software combination.

The foregoing descriptions are merely exemplary embodiments of the present disclosure, but are not intended to limit the present disclosure. For those having ordinary skill in the art, the present disclosure may have various modifications and variations. Any modifications, equivalent replacements, improvements and the like made within the principle of the present disclosure shall fall within the scope of protection of the present disclosure.

**Claims**

1. A method for generating a dynamic threshold parameter of a wireless local area network, the method comprising:

    determining a target threshold parameter by using a threshold evaluation model pre-trained by a server;
    configuring the target threshold parameter to an edge computing node connected to a wireless access point, wherein the edge computing node is configured to run a preset adaptive algorithm according to the target threshold parameter;
    collecting a target statistical parameter corresponding to the target threshold parameter from the edge computing node, so as to obtain a target label pair; and
    updating the threshold evaluation model by using the target label pair, and determining a new target threshold parameter through the updated threshold evaluation model.

2. The method according to claim 1, wherein before determining the target threshold parameter by using the threshold evaluation model pre-trained by the server, the method further comprises:

    acquiring, from a server, an initial training parameter of the threshold evaluation model obtained by means of pre-training; and
    performing initialization processing on the threshold evaluation model by using the initial training parameter, so as to obtain the pre-trained threshold evaluation model.

3. The method according to claim 2, wherein

the initial training parameter is $\theta(w, b)$, wherein w is a weight, and b is an offset;
the threshold evaluation model is $\hat{V} = f_i(f_{i-1}(f_{i-2}(\ldots f_1(x|\theta_1)|\theta_{i-2})|\theta_{i-1})|\theta_i)$; and
the pre-trained threshold evaluation model is $f_i(x) = f_a(w_i \odot x + b_i)$, wherein $\odot$ is a network operator corresponding to a neural network, and $f_a(x)$ is an activation function.

4. The method according to claim 3, wherein

the neural network comprises: a Deep Neural Network, DNN, a Convolutional Neural Network, CNN, or a Recurrent Neural Network, RNN; and
the activation function comprises: a Linear Rectification, ReLU, activation function, a Hyperbolic Tangent, Tanh, activation function, or a Sigmoid activation function, or the like.

5. The method according to claim 1, wherein determining the target threshold parameter by using the threshold evaluation model pre-trained by the server comprises:

selecting, by using a search algorithm, multiple threshold parameters from a threshold parameter space, wherein the threshold parameter space is composed of a plurality of preset threshold parameters;
respectively determining, according to a plurality of pre-stored label pairs or according to the threshold evaluation model, statistical parameters corresponding to the multiple threshold parameters; and
determining a threshold parameter with a maximum statistical parameter among the multiple threshold parameters as the target threshold parameter.

6. The method according to claim 5, wherein respectively determining, according to the plurality of pre-stored label pairs or according to the threshold evaluation model, the statistical parameters corresponding to the multiple threshold parameters comprises:

determining whether the threshold parameter exists in the plurality of label pairs;
in a case where the threshold parameter exists in the plurality of label pairs, determining the statistical parameter corresponding to the threshold parameter from the label pair; and
in a case where the threshold parameter does not exist in the plurality of label pairs, inputting the threshold parameter into the threshold evaluation model, and determining an output result of the threshold evaluation model as the statistical parameter corresponding to the threshold parameter.

7. The method according to claim 5, wherein the search algorithm comprises a reinforcement learning algorithm or a genetic algorithm.

8. The method according to claim 1, wherein configuring the target threshold parameter to the edge computing node connected to the wireless access point comprises:

sending the target threshold parameter to the edge computing node, wherein the edge computing node adjusts the preset adaptive algorithm according to the target threshold parameter; and
running, through the edge computing node, the preset adaptive algorithm in a process of channel access and information transmission.

9. The method according to claim 8, wherein collecting the target statistical parameter corresponding to the target threshold parameter from the edge computing node, so as to obtain the target label pair comprises:

collecting the target statistical parameter generated when the edge computing node runs the preset adaptive algorithm by using the target threshold parameter;
normalizing the target threshold parameter through the edge computing node, so as to obtain a normalized target threshold parameter; and
combining the normalized target threshold parameter and the target statistical parameter to obtain the target label pair.

10. The method according to claim 9, wherein collecting the target statistical parameter generated when the edge computing node runs the preset adaptive algorithm by using the target threshold parameter comprises:

in a process of running the preset adaptive algorithm using the target threshold parameter, acquiring a normalized throughput and/or a packet sending success rate from the edge computing node, wherein the statistical parameter comprises the normalized throughput and/or the packet sending success rate, wherein the normalized throughput is a ratio of a number of successfully sent load bits to a total number of sent load bits, and the packet sending success rate is a ratio of a number of successfully sent Media Access Control, MAC, protocol data units to a total number of sent MAC protocol data units.

11. The method according to claim 9, wherein normalizing the target threshold parameter through the edge computing node, so as to obtain the normalized target threshold parameter comprises:

performing normalization processing on the target threshold parameter by using a following formula:

$$s_{norm} = \frac{1}{\Sigma_i \|s_i\|^2} [\sqrt{s_1}, \sqrt{s_2}, \ldots, \sqrt{s_n}];$$

wherein $s_{norm}$ is the normalized target threshold parameter, $s = [s_1, s_2, \ldots, s_n]$ is a plurality of preset threshold parameters, and $s_i$ is the target threshold parameter.

12. The method according to claim 1, wherein updating the threshold evaluation model by using the target label pair comprises:

training, at the wireless access point, the threshold evaluation model according to a gradient descent method and the target label pair to obtain a training parameter, wherein the training parameter comprises a weight and an offset; and
updating the threshold evaluation model using the training parameter;
wherein a loss function, denoted as loss, of the threshold evaluation model is:

$$loss = \frac{1}{N}\Sigma_k \|\widehat{V}_k - V_k\|^2, \text{ or, } loss = \frac{1}{N}\Sigma_k V_k\log\widehat{V}_k + (1 - V_k)\log(1 - \widehat{V}_k).$$

13. The method according to claim 12, wherein the method further comprises:

respectively reporting to the server, by a plurality of wireless access points, a plurality of training parameters obtained by training the threshold evaluation model according to newly collected target label pairs; and
updating, through the server, an initial training parameter of the threshold evaluation model of the server according to a federal learning algorithm and the plurality of training parameters.

14. The method according to claim 13, wherein updating, through the server, the initial training parameter of the threshold evaluation model of the server according to the federal learning algorithm and the plurality of training parameters comprises:
updating a total loss value, denoted as loss_total, of the threshold evaluation model of the server according to loss values of the threshold evaluation models of the plurality of wireless access points:

loss_total = $\Sigma_L$ loss$_l$, wherein loss$_l$ is the loss value of the threshold evaluation model of the l-th wireless access point;
updating a second weight and a second offset of the threshold evaluation model of the server according to first weights and first offsets of the threshold evaluation models of the plurality of wireless access points, wherein the initial training parameter comprises the second weight and the second offset:

$$w_i = w_i + \sum_L \Delta w_l, \quad b_i = b_i + \sum_L \Delta b_l,$$

wherein $w_i$ is the second weight, $b_i$ is the second offset, $\Delta w_l$ is the first weight of the threshold evaluation model of the l-th wireless access point, and $\Delta b_l$ is the first offset of the threshold evaluation model of the l-th wireless access point.

15. The method according to claim 1, wherein
in a case where the preset adaptive algorithm is used for channel selection, the target threshold parameter at least comprises one of the following: a noise threshold, a channel utilization threshold, a channel rating-purpose weight factor, a packet error rate threshold, or a transmit power threshold.

16. An apparatus for generating a dynamic threshold parameter of a wireless local area network, the apparatus comprising:

a determination module, configured to determine a target threshold parameter by using a threshold evaluation model pre-trained by a server;

a configuration module, configured to configure the target threshold parameter to an edge computing node connected to a wireless access point, wherein the edge computing node is configured to run a preset adaptive algorithm according to the target threshold parameter;

a collection module, configured to collect a target statistical parameter corresponding to the target threshold parameter from the edge computing node, so as to obtain a target label pair; and

an updating module, configured to update the threshold evaluation model by using the target label pair, and determining a new target threshold parameter through the updated threshold evaluation model.

17. A computer-readable storage medium, wherein the computer-readable storage medium stores a computer program, and the computer program, when being run by a processor, causes the processor to execute the method according to any one of claims 1 to 15.

18. An electronic device, comprising a memory and a processor, wherein the memory stores a computer program, and the processor is configured to run the computer program so as to execute the method according to any one of claims 1 to 15.

**Fig. 1**

**Fig. 2**

| Determining a target threshold parameter by using a threshold evaluation model pre-trained by a server | S202 |

↓

| Configuring the target threshold parameter to an edge computing node connected to a wireless access point, wherein the edge computing node is configured to run a preset adaptive algorithm according to the target threshold parameter | S204 |

↓

| Collecting a target statistical parameter corresponding to the target threshold parameter from the edge computing node, so as to obtain a target label pair | S206 |

↓

| Updating the threshold evaluation model by using the target label pair, and determining a new target threshold parameter through the updated threshold evaluation model | S208 |

Fig. 3

Fig. 4

**Fig. 5**

S502

Whether it is the first training?

No

Yes

S504

The platform performs model pre-training and sends model parameters

S506

The central controller initializes a model and searches for an optimal threshold

S508

The AP starts an adaptive algorithm according to the optimal threshold parameter

S510

The AP measures and collects statistical parameters for training the model

S512

The AP returns a label pair (threshold value, statistical parameter), and the central controller updates the model according to the label pair

S514

The central controller sends a gradient, and the platform updates the training model

S516

The central controller searches for a new threshold with the updated model and sends the new threshold

**Fig. 6**

## INTERNATIONAL SEARCH REPORT

| International application No. |
| --- |
| **PCT/CN2023/142126** |

| A. | CLASSIFICATION OF SUBJECT MATTER |
| --- | --- |

H04W 24/02(2009.01)i

According to International Patent Classification (IPC) or to both national classification and IPC

| B. | FIELDS SEARCHED |
| --- | --- |

Minimum documentation searched (classification system followed by classification symbols)

IPC：H04W, H04B, H04L

Documentation searched other than minimum documentation to the extent that such documents are included in the fields searched

Electronic data base consulted during the international search (name of data base and, where practicable, search terms used)

CNKI, CNTXT, ENTXTC, DWPI, IEEE: WIFI, 无线局域网, 节点, 动态, 阈值, 门限, 参数, 自适应, 带宽, 信道, 统计, 边缘运算, 训练, 模型, WLAN, access point, AP, dynamic, threshold, parameter, adaptive, band, channel, edge, train, model

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 112995343 A (SOUTH CHINA UNIVERSITY OF TECHNOLOGY) 18 June 2021 (2021-06-18) <br> description, paragraphs [0030]-[0039] | 1-18 |
| A | CN 112990018 A (JIANGSU BIANZHI TECHNOLOGY CO., LTD.) 18 June 2021 (2021-06-18) <br> entire document | 1-18 |
| A | CN 115190489 A (INNER MONGOLIA UNIVERSITY) 14 October 2022 (2022-10-14) <br> entire document | 1-18 |
| A | WO 2012004689 A1 (SELEX COMMUNICATIONS S.P.A.) 12 January 2012 (2012-01-12) <br> entire document | 1-18 |
| A | US 2022036123 A1 (INTEL CORP.) 03 February 2022 (2022-02-03) <br> entire document | 1-18 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **03 April 2024** | **11 April 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2023/142126** |

| Patent document cited in search report | | | Publication date (day/month/year) | Patent family member(s) | | | Publication date (day/month/year) |
| --- | --- | --- | --- | --- | --- | --- | --- |
| CN | 112995343 | A | 18 June 2021 | None | | | |
| CN | 112990018 | A | 18 June 2021 | None | | | |
| CN | 115190489 | A | 14 October 2022 | None | | | |
| WO | 2012004689 | A1 | 12 January 2012 | AU | 2011275478 | A1 | 06 December 2012 |
| US | 2022036123 | A1 | 03 February 2022 | DE | 102022125334 | A1 | 20 April 2023 |
| | | | | CN | 116011511 | A | 25 April 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023101459860